# EUROPÄISCHE PATENTSCHRIFT

(11) **EP 1 519 822 B1**
(45) Veröffentlichungstag und Bekanntmachung des Hinweises auf die Patenterteilung: **02.09.2015**
(21) Anmeldenummer: 03737882.5
(22) Anmeldetag: 14.05.2003
(51) Int. Cl.: B29C 47/02, B29D 22/00

(54) **EINRICHTUNG UND VERFAHREN ZUR KONTINUIERLICHEN HERSTELLUNG VON FESTIGKEITSTRÄGERVERSTÄRKTEN, SCHLAUCHFÖRMIGEN GEBILDEN**
DEVICE AND METHOD FOR THE CONTINUOUS PRODUCTION OF TUBULAR STRUCTURES THAT ARE REINFORCED WITH A STRENGTHENING SUPPORT
DISPOSITIF ET PROCEDE DE PRODUCTION EN CONTINU DE STRUCTURES SOUS FORME DE TUYAUX FLEXIBLES RENFORCEES PAR UN ELEMENT DE CONSOLIDATION

(30) Priorität: 28.06.2002 DE 10229073
(43) Veröffentlichungstag der Anmeldung: 06.04.2005
(73) Patentinhaber: ContiTech Luftfedersysteme GmbH, 30165 Hannover (DE)
(72) Erfinder: OEHL, Rainer, 30938 Grossburgwedel (DE); WILMER, Roland, 30855 Langenhagen (DE); BERGER, Markus, 31319 Sehnde (DE); BINDER, Klaus, 31157 Sarstedt (DE)
(86) Internationale Anmeldenummer: PCT/DE2003/001561
(87) Internationale Veröffentlichungsnummer: WO 2004/002714

(56) Entgegenhaltungen:
- DE-A- 2 545 058
- GB-A- 2 023 482
- US-A- 3 045 281
- US-A- 3 201 929
- US-A- 4 242 296
- US-B1- 6 508 972

## Beschreibung

Die Erfindung betrifft eine Einrichtung zur kontinuierlichen Herstellung von festigkeitsträgerverstärkten, schlauchförmigen Gebilden gemäß Anspruchs 1, mit
einer Fördereinrichtung zum kontinuierlichen Vortreiben einer Reihe fortlaufend aneinander gekoppelter, zylindrischer Dorne in eine Förderrichtung und zum Rückführen vereinzelter Dorne zum Fertigungsanfang,
mindestens einer Extrusionseinheit zum Aufbringen einer Kautschuk- oder Kunststoffschicht auf den Umfang der Dorne,
mindestens einer Einrichtungseinheit zum Aufbringen mindestens einer Festigkeitsträgerschicht,
einer Trennvorrichtung zum Schneiden der festigkeitsträgerverstärkten, schlauchförmigen Gebilde an den Verbindungsstellen aneinander angrenzender Dorne und
einer Abstrippvorrichtung zum Abstrippen der geschnittenen, festigkeitsträgerverstärkten, schlauchförmigen Gebilde von den vereinzelten Dornen.

Die Erfindung betrifft ferner ein Verfahren zur kontinuierlichen Herstellung von festigkeitsträgerverstärkten, schlauchförmigen Gebilden gemäß anspruchs 11.

Festigkeitsträgerverstärkte, schlauchförmige Gebilde werden insbesondere als Schlauchrollbälge für Luftfedern in Fahrzeugen eingesetzt. Ein Schlauchrollbalgrohling ist hierbei aus übereinander geschichteten, rohrförmigen Kautschuk- und Festigkeitsträgerschichten gebildet.

Herkömmlicherweise werden die Schlauchrollbalgrohlinge konfektioniert, indem ausgeschnittene Kautschukplatten und Gewebestreifen übereinandergelegt und weiterverarbeitet werden. Dies ist relativ aufwendig und fehleranfällig.

In der EP O 285 726 B1 ist ein Verfahren zum Aufbringen einer Fadenlage mit definierten Fadenwinkeln auf eine Kautschuklage beschrieben, die auf einen Dorn aufextrudiert ist. Der Dorn mit der Kautschuklage wird hierzu in eine Drehbank eingespannt und rotiert, während ein rotationsfestgehaltener Fadenführungsring den Dorn umschließt und in Dornlängsrichtung vorwärts bewegt.

Aus der DE 27 50 642 C2 ist ein automatisiertes Verfahren zur Herstellung von mehrlagigen Rohren bekannt, bei dem Kautschuk- und Festigkeitsträgerschichten auf einen ortsfest gelagerten rotierenden Dorn aufgewickelt werden. Eine Materialzufuhreinheit wird hierbei in Längsrichtung entlang dem Dorn bewegt. Nachteilig ist, dass dieses Herstellungsverfahren nicht kontinuierlich, sondern auf die Länge des Dorns begrenzt ist. Zudem kann die Dicke und der Winkel der aufgewickelten Kautschuk- und Festigkeitsträgerschichten nicht mit der für Schlauchrollbälge erforderlichen, ausreichenden Genauigkeit aufgebracht werden.

In der DE 1 180 513 ist ein Wickelverfahren zur kontinuierlichen Herstellung von Schläuchen beschrieben, bei dem Kautschuk- und Festigkeitsträgerschichten auf endlos hintereinander gereihte und in eine Förderrichtung vörgetriebene Reihe von Dornen aufgewickelt werden. Der Schlauch wird auf den Dornen vulkanisiert. Anschließend werden die Dornteilstücke abgezogen und an das Ende des in die Wickelmaschine einlaufenden Dornteilstücks lösbar angehängt. Die für Luftfederbälge erforderliche Präzision kann nachteilig bei dem Wickelverfahren nicht gewährleistet werden. Zudem werden die Dorne bei dem Vulkanisieren thermisch belastet und es besteht die Gefahr, dass sich die Dorne verformen, so dass eine gleichbleibende Qualität der Schlauchrollbalgrohlinge nicht mehr gewährleistet werden kann.

In der DE 25 45 058 C3 ist ein Verfahren und eine Vorrichtung zum Herstellen von gekrümmten Kautschukschläuchen beschrieben, bei dem mit mindestens einem Extruder und einer Fadenarmierungsmaschine Kautschukund Festigkeitsträgerschichten auf kontinuierlich in Förderrichtung vorgetriebene Dorne aufgebracht werden. Die Dorne stoßen hierbei unmittelbar nahtlos aneinander. In einer Schneideinrichtung werden zwei Dorne jeweils gegeneinander so verschoben, dass zwischen ihren Stirnseiten ein Spalt entsteht, in den ein Trennmesser der Schneideinrichtung eingreifen kann. Hierbei wird nachteilig das Fadengelege in dem Schlauchrohling gestreckt und in seiner Lage verschoben. Die Dorne sind flexibel und werden zusammen mit dem auf einem Dorn befindlichen Schlauchrohlingstück in eine gekrümmte Lage gebracht und in einer Vulkanisationsanlage vulkanisiert. Der vulkanisierte, gekrümmte Schlauch wird anschließend von dem Dorn getrennt.

Durch die Verwendung flexibler Dorne kann die für Luftfedern erforderliche Genauigkeit der Schlauchrollbalgrohlinge nicht gewährleistet werden. Zudem besteht bei der Vulkanisation der Schlauchrollbalgrohlinge auf dem Dorn die Gefahr, dass sich die Dorne verziehen. Zudem ist die Herstellung konischer Schlauchrollbälge nicht möglich.

US-A-4242296 zeigt die Merkmale des Oberbegriffs des Anspruchs 1 und 11. Aufgabe der Erfindung war es daher, eine verbesserte Einrichtung und ein Verfahren zur kontinuierlichen Herstellung von festigkeitsträgerverstärkten, schlauchförmigen Gebilden zu schaffen, die eine ausreichende Fertigungspräzision und eine hohe Prozesssicherheit gewährleisten.

Die Aufgabe wird mit der gattungsgemäßen Einrichtung dadurch gelöst, dass die Dorne starr sind, die Dorne derart aneinander gekoppelt sind, dass jeweils eine umlaufende Schnittzone aus einem zum Dorn unterschiedlichen Material vorgesehen ist, und dass die Einrichtung so ausgerichtet ist, dass das Vulkanisieren der festigkeitsträgerverstärkten, schlauchförmigen Gebilde erst nach dem Abstrippen erfolgt, gemäß dem Kennzeichnenden Teil des Anspruchs 1.

Im Unterschied zu dem Verfahren aus der DE 25 45 058 C3 erfolgt das Extrudieren der Kautschukschichten und das Aufspiralisieren der Fadenlagen zur Erzeugung der Festigkeitsträgerschichten auf kontinuierlich vorgetriebenen, starren Dornen. Dabei ist zwischen den Stossflächen der aneinander gekoppelten Dorne jeweils eine umlaufende Schnittzone aus einem zum Dorn unterschiedlichen Material vorgesehen, so dass ein Trennmesser unmittelbar angesetzt werden kann, ohne dass die Dorne relativ gegeneinander verschoben werden müssen und die Lagen und Winkel der Festigkeitsträgerschichten dadurch beeinflusst werden. Für die Zuverlässigkeit von festigkeitsträgerverstärkten, schlauchförmigen Gebilden, insbesondere zur Verwendung bei Luftfedern, ist ein definierter Winkel der Fadenlagen der Festigkeitsträgerschichten entscheidend. Dadurch, dass die festigkeitsträgerverstärkten, schlauchförmigen Gebilde vor dem Vulkanisieren von den vereinzelten Dornen abgestrippt werden, wird sichergestellt, dass die Maßhältigkeit der Dorne durch den thermischen Prozess des Vulkanisierens nicht beeinträchtigt wird. Auf diese Weise wird eine gleichbleibende Fertigungsqualität gewährleistet.

Vorzugsweise ist eine Trennmittelauftragvorrichtung zum Aufbringen von Trennmitteln auf dem Umfang der Dorne vorgesehen. Die Trennmittelauftragvorrichtung ist in Förderrichtung gesehen vor der ersten Extrusionseinrichtung angeordnet. Durch das aufgetragene Trennmittel wird sichergestellt, dass die festigkeitsträgerverstärkten, schlauchförmigen Gebilde nach der Fertigung von den vereinzelten Dornen leicht abgestrippt werden können.

Weiterhin ist es vorteilhaft, eine Schneideinrichtung zum Zuschneiden der abgestrippten festigkeitsträgerverstärkten, schlauchförmigen Gebilde auf definierte Vulkanisationslängen vorzusehen. Die Schneideinrichtung ist im Fertigungsprozess vor einer Vulkanisationseinheit angeordnet. Erfindungsgemäß werden somit die abgestrippten festigkeitsträgerverstärkten, schlauchförmigen Gebilde vor dem Vulkanisieren nochmals geschnitten. Die Schneideinrichtung hat vorzugsweise einen quer zur Längsachse der festigkeitsträgerverstärkten, schlauchförmigen Gebilde und relativ hierzu verfahrbaren Schneidkopf, sowie eine Fixiereinrichtung zum Einspannen und Fixieren der festigkeitsträgerverstärkten, schlauchförmigen Gebilde in Schnittposition.

Die Extrusionsmittel haben vorzugsweise eine Zahnradpumpe zur Förderung des extrudierten Kautschuks- oder Kunststoffs an einen Extrusionskopf. Hierdurch ist eine präzisere Steuerung der Dicke der Kautschuk- oder Kunststoffschichten möglich.

Weiterhin ist vorzugsweise eine Meßeinrichtung zum kontinuierlichen Messen der Vortriebsgeschwindigkeit der Dorne vorgesehen. Eine Regelungseinheit dient zum Regeln der zum Aufbringen mindestens einer Kautschukoder Kunststoffschicht zugeführten Menge und der Rotationsgeschwindigkeit der mindestens einen Spulengattereinrichtung in Abhängigkeit von der Vortriebsgeschwindigkeit derart, dass eine konstante Dicke mindestens der ersten Kautschuk- oder Kunststoffschicht und ein definierter Winkel der mindestens einen Fadenlage ausgebildet wird.

Weiterhin ist vorzugsweise eine Messeinrichtung zum kontinuierlichen Messen der Dicke der unmittelbar auf die Dorne aufgebrachten ersten Kautschuk- oder Kunststoffschicht und eine Regelungseinheit zum Regeln der Rotätionsgeschwindigkeit der nachfolgenden Spulengatter in Abhängigkeit von der gemessenen Dicke der ersten Kautschuk- oder Kunststoffschicht vorgesehen. Die erste Extrusionseinrichtung bildet somit zusammen mit dem nachfolgenden Spulengatter einen Regelkreis, so dass ein gleichbleibender Fadenwinkel in Abhängigkeit von der aufgetragenen Dicke der Kautschuk- oder Kunststoffschicht gewährleistet wird.

Weiterhin sind vorzugsweise Prozessgrößenmessmittel zur Messung von Prozessgrößen beim Aufbringen der Kautschuk- oder Kunststoffschichten und Festigkeitsträgerschichten vorgesehen. Eine Fehlermarkierungseinheit dient zum Auftragen von Markierungen auf die festigkeitsträgerverstärkten, schlauchförmigen Gebilde, wenn die gemessenen Prozessgrößen ein jeweiliges Fehlertoleranzmaß über- oder unterschreiten. Auf diese Weise kann bei der fortdauernden, kontinuierlichen Fertigung sichergestellt werden, dass fehlerhafte Bereiche ausgesondert werden.

Die Dorne haben vorzugsweise eine Länge im Bereich von einem bis acht metern, besonders bevorzugt von zwei bis vier Metern.

Um die Länge der Dorne flexibel an die Produkterfordernisse anpassen zu können, sind Dornadapter vorgesehen, die annähernd nahtlos an einen zugeordneten Dorn anstoßen und fest mit diesem gekoppelt sind. Die Dornadapter haben jeweils ein Kupplungselement zum Ankoppeln des Dornadapters an einen weiteren Dorn derart, dass eine Schnittzone aus einem zum Dorn unterschiedlichen Material zwischen dem Dornadapter und dem weiteren Dorn vorgesehen ist.

Das erfindüngsgemäße Verfahren zur kontinuierlichen Herstellung von festigkeitsträgerverstärkten, schlauchförmigen Gebilden gemäß Anspruchs 11 hat die Schritte:
a) Aufbringen von Kautschuk- oder Kunststoffschichten und Festigkeitsträgerschichten im Verbund auf den Umfang einer Reihe von zylindrischen, starren Dornen, die fortlaufend aneinander gekoppelt und in einer Förderrichtung kontinuierlich vorgetrieben sind;
b) Schneiden der festigkeitsträgerverstärkten, schlauchförmigen Gebilde an den Verbindungsstellen aneinander angrenzender Dorne, wobei die Dorne derart aneinander gekoppelt sind, dass jeweils eine umlaufende Schnittzone aus einem zum Dorn unterschiedlichen Material zwischen den Stossflächen aneinander angrenzender Dorne vorgesehen ist;
c) Trennen der aneinander gekoppelten Dorne voneinander;
d) Vulkanisieren der festigkeitsträgerverstärkten, schlauchförmigen Gebilde oder Teilen davon
e) Rückführen der Dorne zur Bildung der Reihe von Dornen im Schritt a);
f) das Abstrippen der festigkeitsträgerverstärkten, schlauchförmigen Gebilde von den Dornen; erfolgt von dem Vulkanisieren,
g) Vulkanisieren der abgestrippten, festigkeitsträgerverstärkten, schlauchförmigen Gebilde oder von Teilen davon erfolgt nach dem Abstrippen.

Im Unterschied zu dem kontinuierlichen Herstellungsverfahren aus der DE 25 45 058 C3 wird das erfindungsgemäße Verfahren mit starren Dornen durchgeführt, die jeweils mit einer umlaufenden Schnittzone aus einem zum Dorn unterschiedlichen Material aneinander gekoppelt sind, so dass beim Trennen von festigkeitsträgerverstärkten, schlauchförmigen Gebilden in Abschnitte kein Auseinanderziehen der Dorne mehr erforderlich ist. Auf diese Weise wird sichergestellt, dass die Lage der Festigkeitsträgerschichten nicht durch den Trennvorgang verändert wird.

Weiterhin erfolgt das Vulkanisieren der festigkeitsträgerverstärkten, schlauchförmigen Gebilde nach dem Abstrippen so, dass die zur Herstellung der festigkeitsträgerverstärkten, schlauchförmigen Gebilde verwendeten Dorne nicht dem thermischen Vulkanisationsvorgang ausgesetzt sind.

Weitere vorteilhafte Ausführungsformen des Verfahrens sind in den Unteransprüchen beschrieben.

Die Erfindung wird nachfolgend anhand der beigefügten Zeichnung näher erläutert. Es zeigt:

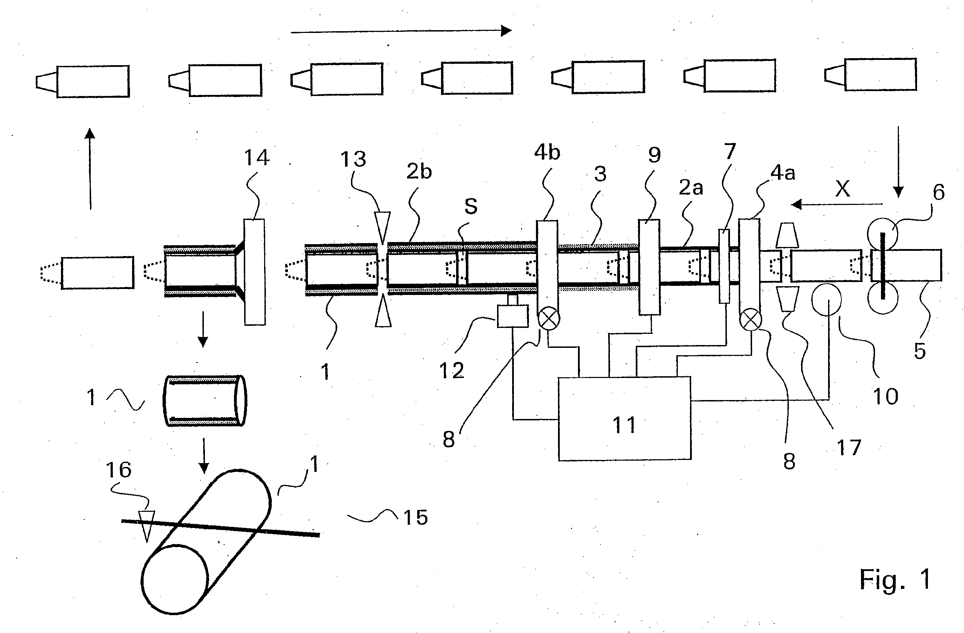

- Figur 1 -: ein schematisches Blockdiagramm einer Fertigungseinrichtung zur kontinuierlichen Herstellung von festigkeitsträgerverstärkten, schlauchförmigen Gebilden.

Die Figur 1 lässt eine erfindungsgemäße Einrichtung zur kontinuierlichen Herstellung von festigkeitsträgerverstärkten, schlauchförmigen Gebilden 1 erkennen, die aus mehreren übereinanderliegenden Kautschuk- oder Kunststoffschichten 2a, 2b und Festigkeitsträgerschichten 3 gebildet sind.

Hierzu hat die Fertigungseinrichtung eine erste Extrusionseinheit 4a zum Auftragen einer ersten Kautschuk- oder Kunststoffschicht 2a auf den Umfang von zylindrischen, starren Dornen 5, die fortlaufend aneinander gekoppelt sind und mit einer Fördereinrichtung 6 fortlaufend in Förderrichtung X vorgetrieben werden. Die Dorne 5 werden durch die erste Extrusionseinheit 4a hindurchgeführt, so dass ein Kautschuk- oder Kunststoffschlauch entsteht. Die Dicke der ersten Kautschukschicht 2a wird mit einer Messeinrichtung 7 gemessen, die in Förderrichtung X gesehen hinter der ersten Extrusionseinheit 4a angeordnet ist. Die erste Extrusionseinheit 4a hat eine Zahnradpumpe 8 zwischen dem Extruder und einem Extrusionskopf, um die zugeführte Kautschuk- oder Kunststoffmenge präzise in Abhängigkeit von der mit der Messeinrichtung 7 gemessenen Dicke zu regeln.

Anschließend wird mit einer Spulengattereinheit 9, die um die Dorne 5 rotiert, eine Fadenlage mit einem definierten Fadenwinkel aufgetragen. Optional können weitere Spulengattereinheiten 9 vorgesehen sein, die beispielsweise gegensinnig rotieren, um mindestens eine zusätzliche, gegebenenfalls gegenläufige Fadenlage aufzubringen.

Es ist weiterhin mindestens eine weitere Extrusionseinheit 4b vorgesehen, um eine weitere Kautschuk- oder Kunststoffschicht 2b aufzubringen.

Die Vortriebsgeschwindigkeit der Dorne 5 wird mit einer Messeinrichtung 10 kontinuierlich gemessen. Die Prozessgrößen, werden einer Steuer- und Regelungseinheit 11 zugeführt, und die Extrusionseinheiten 4a, 4b und die mindestens eine Spulengattereinheit 9 werden so gesteuert und in Abhängigkeit von der Vortriebsgeschwindigkeit und mindestens der Dicke der ersten Kautschuk- oder Kunststoffschicht 2a so geregelt, dass eine definierte Festigkeitsträgerschicht 3 mit festgelegten Fadenwinkeln und eine konstante Dicke der Kautschuk- oder Kunststoffschichten 2 gewährleistet ist. Insbesondere die erste Extrusionseinheit 4a und die unmittelbar nachfolgende Spulengattereinheit 9 bilden einen geschlossenen Regelkreis, da die Fadenwinkel der auf die erste Kautschuk- oder Kunststoffschicht 2a aufgetragenen Fadenlage von der Dicke der ersten Kautschuk- oder Kunststoffschicht 2a abhängig ist. Die Fadenwinkel und die Dicke der ersten Kautschuk- oder Kunststoffschicht stellen wesentliche Qualitätsmerkmale von festigkeitsträgerverstärkten, schlauchförmigen Gebilden, insbesondere zur Verwendung bei Luftfedern, dar.

Mit geeigneten Messmitteln werden Prozessgrößen, wie Winkel und Qualität der Fadenlagen, für die Festigkeitsträgerschichten 3 sowie die Qualität und Dicken der
Kautschuk- oder Kunststoffschichten 2 gemessen. Fehlerhafte Bereiche werden mit einer Fehlermarkierungseinheit 12 durch Auftragen von Markierungen auf die festigkeitsträgerverstärkten, schlauchförmigen Gebilde 1 gekennzeichnet, wenn die gemessenen Prozessgrößen ein jeweiliges Fehlertoleranzmaß über- oder unterschreiten.

Es ist weiterhin eine Trennvorrichtung 13 zum Schneiden der festigkeitsträgerverstärkten, schlauchförmigen Gebilde 1 an den Verbindungsstellen aneinander angrenzender Dorne 5 vorgesehen. Hierzu hat die Trennvorrichtung 13 oder die Gesamtanlage entweder geeignete Mittel zum Erkennen der umlaufenden Schnittzonen S zwischen aufeinanderfolgenden Dornen 5 oder die Schnittzonen S werden aus der Vortriebsgeschwindigkeit bestimmt. Die Trennvorrichtung 13 kann z. B. ein um den Umfang der festigkeitsträgerverstärkten, schlauchförmigen Gebilde 1 umlaufendes Trennmesser haben.

Anschließend werden die Dorne 5 voneinander abgekoppelt und die geschnittenen festigkeitsträgerverstärkten, schlauchförmigen Gebilde 1 mit einer Abstrippvorrichtung 14 von dem jeweiligen Dorn 5 abgestrippt bzw. abgezogen. Dies erfolgt vorzugsweise durch Einbringen von Druckluft in den Zwischenraum zwischen der Umfangsfläche des Dorns 5 und der Innenfläche des festigkeitsträgerverstärkten, schlauchförmigen Gebilde 1. Dabei wandert zunächst eine Druckluftwelle vom vorderen Ende des festigkeitsträgerverstärkten, schlauchförmigen Gebildes 1 bis zum hinteren Ende, und der Dorn 5 wird durch die auf seine Stirnfläche wirkende Druckluft herausgepresst. Die Dorne 5 sind hierzu vorzugsweise an den Stirnflächen geschlossen.

Die vereinzelten Dorne 5 werden dann mit einer Fördereinrichtung an den Anfang der Fertigungseinrichtung zurückgeführt, wie mit den Pfeilen skizziert ist. Auf diese Weise wird ein kontinuierlicher Endlos-Fertigungsprozess gewährleistet.

Die abgestrippten, festigkeitsträgerverstärkten, schlauchförmigen Gebilde 1 werden anschließend einer Schneideinrichtung 15 zugeführt und auf definierte Vulkanisationslänge zugeschnitten. Die Schneideinrichtung 15 ist in Fertigungsrichtung gesehen vor einer nachfolgenden, nicht dargestellten Vulkanisationseinheit zum Vulkanisieren der zugeschnittenen Abschnitte der festigkeitsträgerverstärkten, schlauchförmigen Gebilde angeordnet. Die Schneideinrichtung 15 hat einen quer zur Längsachse verfahrbaren Schneidkopf 16.

Vorzugsweise ist eine Trennmittelauftragsvorrichtung 17 zum Aufbringen von Trennmittel auf den Umfang der Dorne 5 vorgesehen. Die Trennmittelauftragsvorrichtung 17 ist in Förderrichtung X gesehen vor der ersten Extrusionseinrichtung 4a angeordnet. Durch das aufgetragene Trennmittel wird sichergestellt, dass die festigkeitsträgerverstärkten, schlauchförmigen Gebilde 1 nach der Fertigung von den vereinzelten Dornen 5 leicht abgestrippt werden können.

## Patentansprüche

1. Einrichtung zur kontinuierlichen Herstellung von festigkeitsträgerverstärkten, schlauchförmigen Gebilden (1) mit
einer Fördereinrichtung zum kontinuierlichen Vortreiben einer Reihe fortlaufend gekoppelter zylindrischer Dorne (5) in eine Förderrichtung (X) und zum Rückführen vereinzelter Dorne (5) zum Fertigungsanfang, wobei die Dorne (5) starr und derart aneinander gekoppelt sind, dass jeweils eine umlaufende Schnittzone (S) aus einem zum Dorn (5) unterschiedlichen Material zwischen den Stoßflächen aneinander angrenzender Dorne (5) vorgesehen ist
mindestens einer Extrusionseinheit (4) zum Aufbringen einer Kautschuk- oder Kunststoffschicht auf den Umfang der Dorne (5),
mindestens einer Einrichtung (9) zum Aufbringen mindestens einer Festigkeitsträgerschicht (3),
einer Trennvorrichtung (13) zum Schneiden der festigkeitsträgerverstärkten, schlauchformigen Gebilde (1) an den Verbindungsstellen aneinander angrenzender Dorne (5),
und einer Abstrippeinrichtung (14) zum Abstrippen der geschnittenen, festigkeitsträgerverstärkten, schlauchförmigen Gebilde (1) von den vereinzelten Dornen (5),
**dadurch gekennzeichnet, dass**
die Einrichtung so ausgerichtet ist, dass ein Vulkanisieren der festigkeitsträgerverstärkten, schlauchförmigen Gebilde (1) erst nach dem Abstrippen erfolgt.

2. Einrichtung nach Anspruch 1, **gekennzeichnet durch** eine Trennmittelauftragsvorrichtung (18) zum Aufbringen von Trennmittel auf den Umfang der Dorne (5), wobei die Trennmittelauftragsvorrichtung (18) in Förderrichtung gesehen vor einer ersten Extrusionseinrichtung (4a) angeordnet ist.

3. Einrichtung nach Anspruch 1 oder 2, **gekennzeichnet durch** eine Schneideinrichtung (15) zum Zuschneiden der abgestrippten, festigkeitsträgerverstärkten, schlauchförmigen Gebilde (1) auf definierte Vulkanisationslänge, wobei die Schneideinrichtung (15) im Fertigungsprozess vor einer Vulkanisationseinheit angeordnet ist.

4. Einrichtung nach Anspruch 3, **dadurch gekennzeichnet, dass** die Schneideinrichtung (15) einen quer zur Längsachse der festigkeitsträgerverstärkten, schlauchförmigen Gebilde (1) relativ hierzu verfahrbaren Schneidkopf (16) hat.

5. Einrichtung nach einem der vorhergehenden Ansprüche, **dadurch gekennzeichnet, dass** die Extrusionseinheiten (4) jeweils eine Zahnradpumpe (8) zur Förderung des extrudierten Kautschuks oder Kunststoffs an einen Extrusionskopf haben.

6. Einrichtung nach einem der vorhergehenden Ansprüche, **gekennzeichnet durch** mindestens eine Messeinrichtung (7) zum kontinuierlichen Messen der Vortriebsgeschwindigkeit der Dorne (5) und eine Regelungseinheit (11) zum Regeln der zum Aufbringen einer Kautschuk- oder Kunststoffschicht (2) zugeführten Menge und der Rotationsgeschwindigkeit der Spulengattereinheit (9) in Abhängigkeit von der Vortriebsgeschwindigkeit derart, dass eine konstante Dicke mindestens der ersten Kautschuk- oder Kunststoffschicht (2a) und ein definierter Winkel der mindestens einen Fadenlage der Festigkeitsträgerschichten (3) ausgebildet wird.

7. Einrichtung nach einem der vorhergehenden Ansprüche, **gekennzeichnet durch** mindestens eine Messeinrichtung (7) zum kontiniuerlichen Messen der Dicke der unmittelbar auf die Dorne (5) aufgebrachten ersten Kautschuk- oder Kunststoffschicht (2a) und eine Regelungseinheit (11) zum Regeln der Rotationsgeschwindigkeit des Spulengatters der nachfolgenden Spulengattereinheit (9) in Abhängigkeit von der gemessenen Dicke der ersten Kautschuk- oder Kunststoffschicht (2a).

8. Einrichtung nach einem der vorhergehenden Ansprüche, **gekennzeichnet durch** Prozessgrößenmessmittel zum Messen von Prozessgrößen beim Aufbringen der Kautschuk- oder Kunststoffschichten (2) und Festigkeitsträgerschichten (3) und einer Fehlermarkierungseinheit (10) zum Auftragen von Markierungen auf den festigkeitsverstärkten, schlauchförmigen Gebilden (1), wenn die gemessenen Prozessgrößen ein jeweiliges Fehlertoleranzmaß über- oder unterschreiten.

9. Einrichtung nach einem der vorhergehenden Ansprüche, **dadurch gekennzeichnet, dass** die Dorne (5) eine Länge im Bereich von einem bis acht Metern, vorzugsweise zwei bis vier Meter haben.

10. Einrichtung nach einem der vorhergehenden Ansprüche, **gekennzeichnet durch** Dornadapter zum Verlängern der Standardlänge der Dorne (5), wobei die Dornadapter annähernd nahtlos an einen zugeordneten Dorn (5) anstoßen und fest mit dem Dorn (5) gekoppelt sind, und wobei die Dornadapter ein Kupplungselement zum Ankoppeln des Dornadapters an einen weiteren Dorn (5) mit einer umlaufenden Schnittzone (S) aus einem zum Dorn (5) unterschiedlichen Material zwischen den Stoßflächen an einen angrenzenden Dorn (5) haben.

11. Verfahren zur kontinuierlichen Herstellung von festigkeitsträgerverstärkten, schlauchförmigen Gebilde (1), mit den Schritten:
a) Aufbringen von Kautschuk- oder Kunststoffschichten (2) und Festigkeitsträgerschichten (3) im Verbund auf den Umfang einer Reihe von zylindrischen starren Dornen (5), die fortlaufend aneinander gekoppelt und in einer Förderrichtung (X) kontinuierlich vorgetrieben sind,
b) Schneiden der festigkeitsträgerverstärkten, schlauchförmigen Gebilde (1) an den Verbindungsstellen aneinander angrenzender Dorne (5), wobei die Dorne (5) derart aneinander gekoppelt sind, dass sich jeweils eine umlaufende Schnittzone (S) aus einem zum Dorn (5) unterschiedlichen Material zwischen den Stoßflächen aneinander angrenzender Dorne (5) vorgesehen ist,
c) Trennen der aneinander gekoppelten Dorne (5) voneinander,
d) Vulkanisieren der festigkeitsträgerverstärkten, schlauchförmigen Gebilde (1) oder Teilen davon
e) Rückführen der Dorne (5) zur Bildung der Reihe von Dornen (5) im Schritt a)
**gekennzeichnet durch folgende Verfahrensschritte**
f) das Abstrippen der festigkeitsträgerverstärkten, schlauchförmigen Gebilde (1) von den Dornen (5) erfolgt vor dem Vulkanisieren,
g) das Vulkanisieren der abgestrippten festigkeitsträgerverstärkten, schlauchförmigen Gebilde (1) oder von Teilen davon erfolgt nach dem Abstrippen.

12. Verfahren nach Anspruch 11, **gekennzeichnet durch** Auftragen von Trennmittel vor dem Auftragen einer ersten Kautschuk- oder Kunststoffschicht (2a) auf die Dorne (5) im Schritt a).

13. Verfahren nach Anspruch 11 oder 12, **gekennzeichnet durch** Zuschneiden der abgestrippten, festigkeitsträgerverstärkten, schlauchförmigen Gebilde (1) auf definierte Vulkanisationslänge vor dem Vulkanisieren im Schritt f).

14. Verfahren nach einem der Ansprüche 11 bis 13, **gekennzeichnet durch** Extrudieren der Kautschuk- oder Kunststoffschichten (2) jeweils auf den Umfang der zylindrischen Dorne (5) und auf die Festigkeitsträgerschichten (3).

15. Verfahren nach Anspruch 14, **gekennzeichnet durch** volumenabhängige Steuerung der Dicke der Kautschuk- oder Kunststoffschichten (2) mittels einer Zahnradpumpe (8), die zwischen dem Extruder und dem Extrusionskopf einer Extrusionseinheit (4) angeordnet ist.

16. Verfahren nach einem der Ansprüche 11 bis 15, **gekennzeichnet durch** Aufspiralisieren von Fäden mit einem rotierenden Spulengatter zum Aufbringen einer Festigkeitsträgerschicht (3).

17. Verfahren nach einem der Ansprüche 11 bis 16, **gekennzeichnet durch** kontinuierliches Messen der Vortriebsgeschwindigkeit der Dorne (5) und Regeln der zum Aufbringen einer Kautschuk- oder Kunststoffschicht (2) zugeführten Kautsehuk- oder Kunststoffmenge und Regeln des Aufbringens der Festigkeitsträgerschicht (3) in Abhängigkeit von der Vortriebsgeschwindigkeit derart, dass eine konstante Dicke der Kautschuk- oder Kunststoffschichten (2) und eine definierte Festigkeitsträgerschicht (3) ausgebildet wird.

18. Verfahren nach Anspruch 17, **gekennzeichnet durch** kontinuierliches Messen der Dicke der unmittelbar auf den Dorn (5) aufgebrachten ersten Kautschuk- oder Kunststoffschicht (2a) und Regeln des Aufbringens der Festigkeitsträgerschicht (3) in Abhängigkeit von der gemessenen Dicke der Kautschuk- oder Kunststoffschicht (2a).

19. Verfahren nach einem der Ansprüche 12 bis 18, **gekennzeichnet durch** Messen von Prozessgrößen bei dem Aufbringen der Kautschuk- oder Kunststoffschichten (2) und Festigkeitsträgerschichten (3), Markieren von fehlerhaften Bereichen des Gebildes (1), wenn die Prozessgrößen ein jeweiliges Fehlertoleranzmaß über- oder unterschreiten, optisches Erkennen der markierten, fehlerhaften Bereiche und Aussondern der als fehlerhaft erkannten Abschnitte der festigkeitsträgerverstärkten, schlauchförmigen Gebilde nach dem Abstrippen der festigkeitsträgerverstärkten, schlauchförmigen Gebilde (1).

## Claims

1. Device for the continuous production of tubular structures (1) reinforced with strengthening supports, comprising
a conveying device for continuously advancing a series of sequentially coupled cylindrical mandrels (5) in a conveying direction (X) and for returning individually separated mandrels (5) to the beginning of production, the mandrels (5) being coupled to one another rigidly and in such a way that in each case a peripherally extending cutting zone (S) of a material different from the mandrel (5) is provided between the abutting surfaces of mutually adjoining mandrels (5),
at least one extrusion unit (4) for applying a layer of rubber or plastic to the periphery of the mandrels (5),
at least one device (9) for applying at least one layer of strengthening supports (3),
a separating device (13) for cutting the tubular structure (1) reinforced with strengthening supports at the connecting points of mutually adjoining mandrels (5),
and a stripping-off device (14) for stripping off the cut tubular structure (1) reinforced with strengthening supports from the individually separated mandrels (5),
**characterized in that**
the device is designed such that vulcanizing of the tubular structure (1) reinforced with strengthening supports only takes place after the stripping off.

2. Device according to Claim 1, **characterized by** a release-agent applying device (18) for applying release agent to the periphery of the mandrels (5), the release-agent applying device (18) being arranged upstream of a first extrusion device (4a), as seen in the conveying direction.

3. Device according to Claim 1 or 2, **characterized by** a cutting device (15) for cutting the stripped-off tubular structure (1) reinforced with strengthening supports to a defined vulcanizing length, the cutting device (15) being arranged upstream of a vulcanizing unit in the production process.

4. Device according to Claim 3, **characterized in that** the cutting device (15) has a cutting head (16) that is movable transversely to the longitudinal axis of the tubular structure (1) reinforced with strengthening supports in relation thereto.

5. Device according to one of the preceding claims, **characterized in that** the extrusion units (4) respectively have a gear pump (8) for feeding the extruded rubber or plastic to an extrusion head.

6. Device according to one of the preceding claims, **characterized by** at least one measuring device (7) for continuously measuring the rate of advancement of the mandrels (5) and a controlling unit (11) for controlling the amount supplied for applying a layer of rubber or plastic (2) and the rotational speed of the bobbin creel unit (9) in dependence on the rate of advancement in such a way that a constant thickness of at least the first layer of rubber or plastic (2a) and a defined angle of the at least one layer of filaments of the layers of strengthening supports (3) are formed.

7. Device according to one of the preceding claims, **characterized by** at least one measuring device (7) for continuously measuring the thickness of the first layer of rubber or plastic (2a) applied directly to the mandrels (5) and a controlling unit (11) for controlling the rotational speed of the bobbin creel of the downstream bobbin creel unit (9) in dependence on the measured thickness of the first layer of rubber or plastic (2a).

8. Device according to one of the preceding claims, **characterized by** process-variable measuring means for measuring process variables when applying the layers of rubber or plastic (2) and layers of strengthening supports (3) and a defect marking unit (10) for applying markings to the tubular structures (1) reinforced with strengthening supports if the measured process variables are above or below a respective defect tolerance level.

9. Device according to one of the preceding claims, **characterized in that** the mandrels (5) have a length in the range of one to eight metres, preferably two to four metres.

10. Device according to one of the preceding claims, **characterized by** mandrel adapters for lengthening the standard length of the mandrels (5), the mandrel adapters abutting an assigned mandrel (5) virtually seamlessly and being securely coupled to the mandrel (5), and the mandrel adapters having a coupling element for coupling the mandrel adapter to a further mandrel (5) with a peripherally extending cutting zone (S) of a material different from that of the mandrel (5) between the abutting surfaces to an adjoining mandrel (5).

11. Method for the continuous production of tubular structures (1) reinforced with strengthening supports, comprising the steps of:
a) applying layers of rubber or plastic (2) and layers of strengthening supports (3) in composite to the periphery of a row of cylindrical rigid mandrels (5), which are sequentially coupled to one another and are continuously advanced in a conveying direction (X),
b) cutting the tubular structure (1) reinforced with strengthening supports at the connecting points of mutually adjoining mandrels (5), the mandrels (5) being coupled to one another in such a way that in each case a peripherally extending cutting zone (S) of a material different than that of the mandrel (5) is provided between the abutting surfaces of mutually adjoining mandrels (5),
c) separating the coupled-together mandrels (5) from one another,
d) vulcanizing the tubular structure (1) reinforced with strengthening supports, or parts thereof,
e) returning the mandrels (5) to form the row of mandrels (5) in step a),
**characterized by** the following method steps
f) the stripping off of the tubular structure (1) reinforced with strengthening supports from the mandrels (5) is performed before the vulcanizing,
g) the vulcanizing of the stripped-off tubular structure (1) reinforced with strengthening supports, or parts thereof, is performed after the stripping off.

12. Method according to Claim 11, **characterized by** applying release agent before the application of a first layer of rubber or plastic (2a) to the mandrels (5) in step a).

13. Method according to Claim 11 or 12, **characterized by** cutting the stripped-off tubular structure (1) reinforced with strengthening supports to a defined vulcanizing length before the vulcanizing in step f).

14. Method according to one of Claims 11 to 13, **characterized by** extruding the layers of rubber or plastic (2) in each case onto the periphery of the cylindrical mandrels (5) and onto the layers of strengthening supports (3).

15. Method according to Claim 14, **characterized by** volume-dependent control of the thickness of the layers of rubber or plastic (2) by means of a gear pump (8) which is arranged between the extruder and the extrusion head of an extrusion unit (4).

16. Method according to one of Claims 11 to 15, **characterized by** spiralling on filaments with a rotating bobbin creel for applying a layer of strengthening supports (3).

17. Method according to one of Claims 11 to 16, **characterized by** continuously measuring the rate of advancement of the mandrels (5) and controlling the amount of rubber or plastic supplied for applying a layer of rubber or plastic (2) and controlling the application of the layer of strengthening supports (3) in dependence on the rate of advancement in such a way that a constant thickness of the layers of rubber or plastic (2) and a defined layer of strengthening supports (3) are formed.

18. Method according to Claim 17, **characterized by** continuously measuring the thickness of the first layer of rubber or plastic (2a) applied directly to the mandrel (5) and controlling the application of the layer of strengthening supports (3) in dependence on the measured thickness of the layer of rubber or plastic (2a).

19. Method according to one of Claims 12 to 18, **characterized by** measuring process variables when applying the layers of rubber or plastic (2) and layers of strengthening supports (3), marking defective regions of the structure (1) if the process variables are above or below a respective defect tolerance level, visually detecting the marked, defective regions and segregating the portions detected as defective of the tubular structure reinforced with strengthening supports after the stripping off of the tubular structure (1) reinforced with strengthening supports.

## Revendications

1. Dispositif de production en continu de structures sous forme de tuyaux flexibles (1) renforcées par un élément de consolidation, avec
un dispositif de transport pour faire avancer en continu une série de mandrins cylindriques (5) couplés sans interruption dans une direction de transport (X) et pour faire revenir des mandrins isolés (5) au début de la fabrication, dans lequel les mandrins (5) sont couplés l'un à l'autre de façon rigide et de telle manière qu'il soit chaque fois prévu une zone de coupe périphérique (S) en un matériau différent du mandrin (5) entre les faces en contact de mandrins (5) adjacents l'un à l'autre,
au moins une unité d'extrusion (4) pour appliquer une couche de caoutchouc ou de matière plastique sur la périphérie des mandrins (5),
au moins un dispositif (9) pour déposer une couche d'un élément de consolidation (3),
un dispositif de coupe (13) pour couper les structures sous forme de tuyaux flexibles (1) renforcées par un élément de consolidation aux points de liaison de mandrins adjacents l'un à l'autre (5),
et un dispositif d'enlèvement (14) pour l'enlèvement des structures sous forme de tuyaux flexibles (1) renforcées par un élément de consolidation des mandrins isolés (5),
**caractérisé en ce que** le dispositif est configuré de telle manière qu'une vulcanisation des structures sous forme de tuyaux flexibles (1) renforcées par un élément de consolidation ne soit effectuée qu'après l'enlèvement.

2. Dispositif selon la revendication 1, **caractérisé par** un dispositif de dépôt d'agent de séparation (18) pour le dépôt d'agent de séparation sur la périphérie des mandrins (5), dans lequel le dispositif de dépôt d'agent de séparation (18) est disposé en amont du premier dispositif d'extrusion (4a), vu dans la direction de transport.

3. Dispositif selon la revendication 1 ou 2, **caractérisé par** un dispositif de coupe (15) pour découper les structures sous forme de tuyaux flexibles (1) renforcées par un élément de consolidation enlevées à une longueur de vulcanisation définie, dans lequel le dispositif de coupe (15) est disposé en amont d'une unité de vulcanisation dans le processus de fabrication.

4. Dispositif selon la revendication 3, **caractérisé en ce que** le dispositif de coupe (15) comporte une tête de coupe (16) déplaçable transversalement à l'axe longitudinal des structures sous forme de tuyaux flexibles (1) renforcées par un élément de consolidation par rapport à celles-ci.

5. Dispositif selon l'une quelconque des revendications précédentes, **caractérisé en ce que** des unités d'extrusion (4) comportent respectivement une pompe à engrenages (8) pour la fourniture du caoutchouc ou du plastique extrudé à une tête d'extrusion.

6. Dispositif selon l'une quelconque des revendications précédentes, **caractérisé par** au moins un dispositif de mesure (27) pour la mesure continue de la vitesse d'avancement des mandrins (5) et une unité de régulation (11) pour la régulation de la quantité fournie pour le dépôt d'une couche de caoutchouc ou de matière plastique (2) et de la vitesse de rotation de l'unité de râtelier de bobines (9) en fonction de la vitesse d'avancement, de telle manière qu'une épaisseur constante au moins de la première couche de caoutchouc ou de matière plastique (2a) et un angle défini de ladite au moins une couche de fils des couches d'éléments de consolidation (3) soient réalisés.

7. Dispositif selon l'une quelconque des revendications précédentes, **caractérisé par** au moins un dispositif de mesure (7) pour la mesure continue de l'épaisseur de la première couche de caoutchouc ou de matière plastique (2a) déposée directement sur les mandrins (5) et une unité de régulation (11) pour la régulation de la vitesse de rotation du râtelier de bobines de l'unité de râtelier de bobines suivante (9) en fonction de l'épaisseur mesurée de la première couche de caoutchouc ou de matière plastique (2a).

8. Dispositif selon l'une quelconque des revendications précédentes, **caractérisé par** des moyens de mesure de grandeurs du processus pour la mesure de grandeurs du processus lors du dépôt des couches de caoutchouc ou de matière plastique (2) et de couches d'éléments de consolidation (3) et une unité de marquage de défauts (10) pour apposer des marquages sur les structures sous forme de tuyaux flexibles (1) renforcées par un élément de consolidation, lorsque les grandeurs de processus mesurées dépassent, vers le haut ou vers le bas, une mesure de tolérance de défaut respective.

9. Dispositif selon l'une quelconque des revendications précédentes, **caractérisé en ce que** les mandrins (5) présentent une longueur de l'ordre de un à huit mètres, de préférence de deux à quatre mètres.

10. Dispositif selon l'une quelconque des revendications précédentes, **caractérisé par** des adaptateurs de mandrins pour prolonger la longueur standard des mandrins (5), dans lequel les adaptateurs de mandrins s'ajustent pratiquement sans joint à un mandrin associé (5) et sont fermement couplés au mandrin (5), et dans lequel les adaptateurs de mandrins comportent un élément de couplage pour le couplage de l'adaptateur de mandrin à un autre mandrin (5) avec une zone de coupe périphérique (S) en un matériau différent du mandrin (5) entre les faces en contact sur un mandrin adjacent (5).

11. Procédé de production en continu de structures sous forme de tuyaux flexibles (1) renforcées par un élément de consolidation, comprenant les étapes suivantes:
a) dépôt de couches de caoutchouc ou de matière plastique (2) et de couches d'élément de consolidation (3) en composite sur la périphérie d'une série de mandrins rigides cylindriques (5), qui sont couplés l'un à l'autre sans interruption et qui avancent en continu dans une direction de transport (X),
b) coupe de structures sous forme de tuyaux flexibles (1) renforcées par un élément de consolidation à des points de liaison de mandrins (5) adjacents l'un à l'autre, dans lequel les mandrins (5) sont couplés l'un à l'autre de telle manière qu'il soit prévu une zone de coupe périphérique (S) en un matériau différent du mandrin (5) entre les faces en contact de mandrins adjacents l'un à l'autre (5),
c) séparation l'un de l'autre des mandrins (5) couplés l'un à l'autre,
d) vulcanisation des structures sous forme de tuyaux flexibles (1) renforcées par un élément de consolidation, ou de parties de celles-ci,
e) renvoi des mandrins (5) pour la formation de la série de mandrins (5) à l'étape a),
**caractérisé par** les étapes suivantes:
f) l'enlèvement des structures sous forme de tuyaux flexibles (1) renforcées par un élément de consolidation hors des mandrins (5) est effectué avant la vulcanisation,
g) la vulcanisation des structures sous forme de tuyaux flexibles (1) renforcées par un élément de consolidation enlevées ou de parties de celles-ci est effectuée après l'enlèvement.

12. Procédé selon la revendication 11, **caractérisé par** le dépôt d'agent de séparation avant le dépôt d'une première couche de caoutchouc ou de matière plastique (2) sur les mandrins (5) à l'étape a).

13. Procédé selon la revendication 11 ou 12, **caractérisé par** le découpage des structures sous forme de tuyaux flexibles (1) renforcées par un élément de consolidation à une longueur de vulcanisation définie avant la vulcanisation à l'étape f).

14. Procédé selon l'une quelconque des revendications 11 à 13, **caractérisé par** l'extrusion des couches de caoutchouc ou de matière plastique (2) respectivement sur la périphérie des mandrins cylindriques (5) et sur les couches d'élément de consolidation (3).

15. Procédé selon la revendication 14, **caractérisé par** la commande en fonction du volume de l'épaisseur des couches de caoutchouc ou de matière plastique (2) au moyen d'une pompe à engrenages (8), qui est disposée entre l'extrudeuse et la tête d'extrusion d'une unité d'extrusion (4).

16. Procédé selon l'une quelconque des revendications 11 à 15, **caractérisé par** l'enroulement en spirale de fils avec un râtelier de bobines tournant pour le dépôt d'une couche d'élément de consolidation (3).

17. Procédé selon l'une quelconque des revendications 11 à 16, **caractérisé par** la mesure continue de la vitesse d'avancement des mandrins (5) et la régulation de la quantité de caoutchouc ou de matière plastique fournie pour le dépôt d'une couche de caoutchouc ou de matière plastique (2) et la régulation du dépôt de la couche d'élément de consolidation (3) en fonction de la vitesse d'avancement, de telle manière qu'une épaisseur constante des couches de caoutchouc ou de matière plastique (2) et qu'une couche définie d'élément de consolidation (3) soient réalisées.

18. Procédé selon la revendication 17, **caractérisé par** la mesure continue de l'épaisseur de la première couche de caoutchouc ou de matière plastique (2a) déposée directement sur le mandrin (5) et la régulation du dépôt de la couche d'élément de consolidation (3) en fonction de l'épaisseur mesurée de la couche de caoutchouc ou de matière plastique (2a).

19. Procédé selon l'une quelconque des revendications 12 à 18, **caractérisé par** la mesure de grandeurs du processus lors du dépôt des couches de caoutchouc ou de matière plastique (2) et de couches d'élément de consolidation (3), le marquage de zones défectueuses de la structure (1), lorsque les grandeurs du processus dépassent vers le haut ou vers le bas une mesure de tolérance de défaut respective, la reconnaissance optique des zones défectueuses marquées et l'élimination des parties reconnues comme défectueuses des structures sous forme de tuyaux flexibles renforcées par un élément de consolidation après l'enlèvement des structures sous forme de tuyaux flexibles (1) renforcées par un élément de consolidation.
